# EUROPEAN PATENT SPECIFICATION

(11) **EP 1 625 791 B1**
(45) Date of publication and mention of the grant of the patent: **12.05.2010**
(21) Application number: 04733654.0
(22) Date of filing: 18.05.2004
(51) Int. Cl.: A01N 47/40, A01N 25/22, A01N 25/30, A01N 51/00, A01N 25/02

(54) **INSECTICIDAL COMPOSITION**
INSEKTIZIDE ZUSAMMENSETZUNG
COMPOSITION INSECTICIDE

(30) Priority: 19.05.2003 JP 2003140022; 20.08.2003 JP 2003296189
(43) Date of publication of application: 15.02.2006
(73) Proprietor: NIPPON SODA CO., LTD., Tokyo 100-8165 (JP)
(72) Inventor: ASAI, Makoto, c/o Odawara Research Center, Kanagawa 2500280 (JP); NAKAMURA, Rieko, c/o Odawara Research Center, Shizuoka 421- 0412 (JP)
(74) Representative: Duncan, Garreth Andrew
(86) International application number: PCT/JP2004/007037
(87) International publication number: WO 2004/100662

(56) References cited:
- EP-A- 0 836 851
- EP-A- 1 212 943
- WO-A-01/43547
- WO-A-02/098230
- WO-A-2005/074685
- WO-A2-02/098230
- US-A- 5 071 463

## Description

### TECHNICAL FIELD

The present invention relates to a water-soluble solution which evenly dissolves in water and exhibites excellent insecticidal activity, and particularly relates to a water-soluble solution containing as its active ingredient a chloronicotinyl compound such as acetamiprid.

### BACKGROUND ART

Although emulsions, wettable powders, flowable agents, or the like can be raised among agricultural chemical formulations as examples of formulations that are to be diluted with water before spraying, a method for formulation of a water-soluble agent in which an active ingredient is dissolved in a polar solvent which readily dissolves in water is preferred due to easy handling thereof. As a water-soluble agent containing a chloronicotinyl compound as a bioactive ingredient, Japanese Laid-Open Patent Application No. Hei 8-92091, for example, discloses a formulation in which a chloronicotinyl insecticide such as imidacloprid is formulated with a solvent such as ethanol, butanol, glycerol, hydrocarbons, polyethylene glycol, N-methylpyrrolidone, or the like in a concentrated solution which is to be diluted before application, and more specifically discloses a water-soluble concentrated (SL) formulation using imidacloprid with a natural emulsifier based on an alkylaryl polyglycol ether or sodium diisooctyl sulfosuccinate as a surfactant, and dimethyl sulfoxide and isopropanol as polar solvents.

Moreover, Published Japanese Translation No. 2001-506664 of PCT International Publication WO 98/28277 discloses as a formulation of a compound having insecticidal activity a water-soluble agent using a nonyl phenol ethylene oxide concentrated solution, and a concentrated solution of N-methylpyrrolidone or tristyryl phenol ethylene oxide, 70% W/W solution of calcium dodecylbenzene sulfonate, N-methylpyrrolidone, and Solvesso. US 2004/0157743 (based on WO 02/098230) is concerned with fatty alcohol ethoxylates as penetrants for insecticidally active compounds. Such active compounds are selected from the group of neonicotinyls. The document discloses compositions that contain the ethoxylates in concentrations from 0.1 to 30% by weight. In addition, the weight ratio of the active compound to ethoxylate is from 1:0.1 to 1:2.0. According to the general disclosure of this document, the solvent comprises from 1 to 80% by weight of dimethyl sulfoxide, N-methylpyrrolidone and/or butyrolactone. However, the only solvent disclosed in the specific examples is N-methylpyrrolidone.

US 5071463 is concerned with an emulsifiable concentrate of an agriculturally active chemical, a surfactant, an organic diluent and a solvent having a first component and a second component. Dilution of said concentrate provides a highly stable emulsion. The emulsion is stable even when containing relatively high concentrations of agriculturally active ingredients. The solvent may contain pyrrolidones.

However, the above-mentioned compositions are insufficiently stable at low temperature and have problems with the handling thereof in a state of concentrated solution, and the activity thereof is also insufficient.

### DISCLOSURE OF THE INVENTION

The present invention has as its object to provide a water-soluble solution of chloronicotinyl insecticide which puts less burden on the environment and has excellent effects.

As a result of conducting extensive studies to solve the aforementioned problems, the inventors of the present invention found that the aforementioned problems could be solved by using an organic solvent which is a mixed solvent containing dimethyl sulfoxide and either dimethylacetamide or γ-butyrolactone, and additionally by combining a propylene oxide/ethylene oxide block copolymer surfactant, thereby leading to completion of the present invention.

Specifically, the present invention relates to the following:
[1] a liquid insecticidal composition characterized by
   comprising: (1) a chloronicotinyl compound; (2) a solvent comprsing dimethyl sulfoxide and either dimethylacetamide or γ-butyrolactone; and (3) a propylene oxide / ethylene oxide block copolymer surfactant;
[2] a liquid insecticidal composition according to [1]
   characterized in that the chloronicotinyl compound is acetamiprid;
[3] a liquid insecticidal composition according to [1] or [2]
   characterized in that the chloronicotinyl compound (1) is contained in an amount of 1.5 to 40% by weight, the solvent (2) is contained in an amount of 59.9 to 98.4% by weight, and the surfactant (3) is contained in an amount of 0.1 to 10% by weight;
[4] a liquid insecticidal composition according to any one of [1] to [3] characterized in that the weight ratio of dimethyl sulfoxide to either dimethylacetamide or γ-butyrolactone in the solvent is in the range of 10:90 to 90:10; and
[5] a liquid insecticidal composition according to any one of [1] to [4] characterized in that the solvent comprises 2 to 40% by weight of N-methylpyrrolidone relative to the whole solvent.

The chloronicotinyl compound to be used in the present invention is not particularly limited, provided that it has a chloronicotinyl group, and the following compounds can be specifically raised as examples.

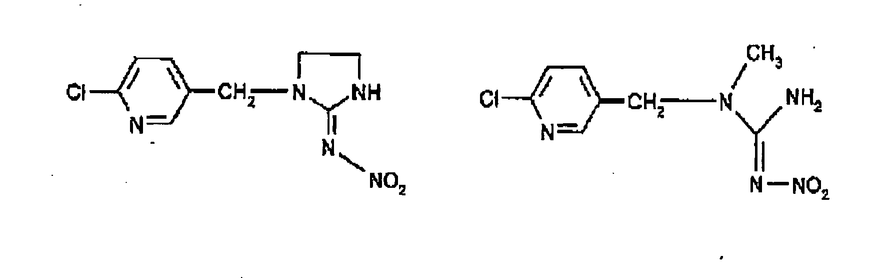

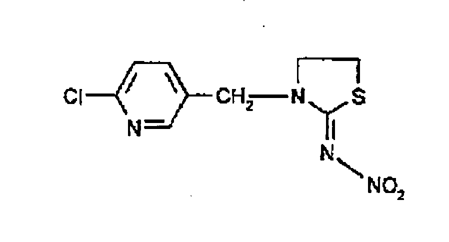

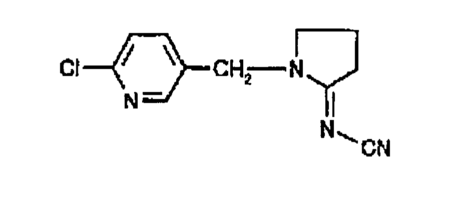

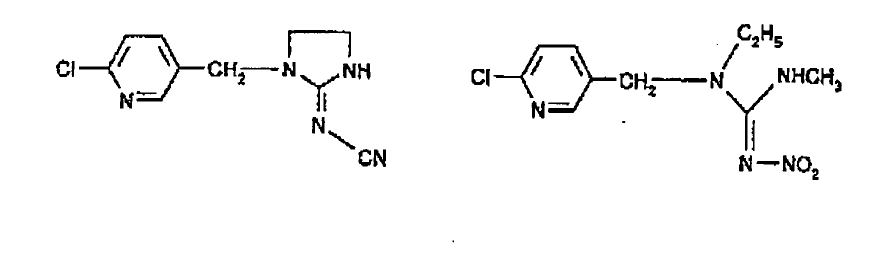

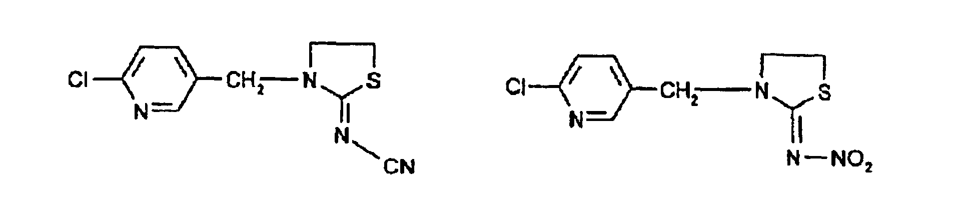

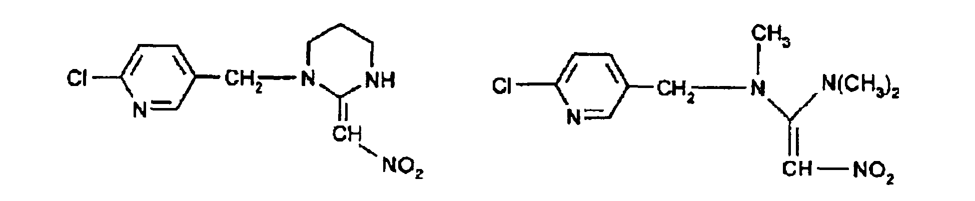

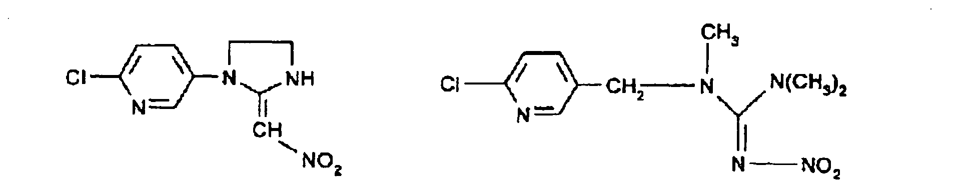

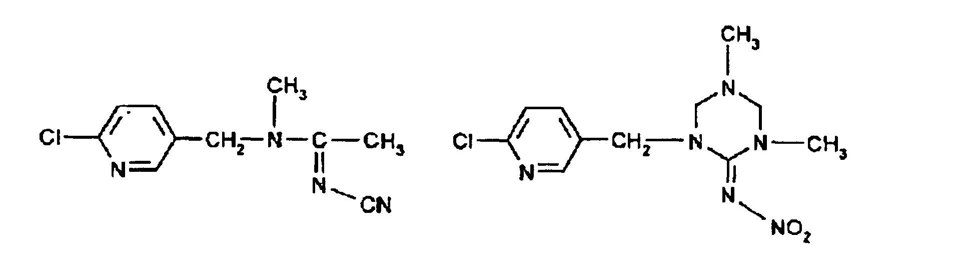

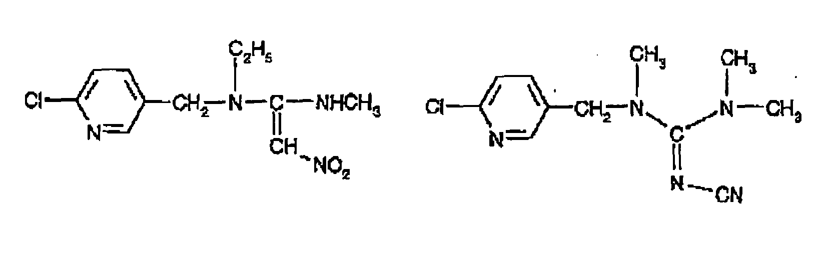

Among them, acetamiprid is particularly preferable.

The solvent usable in the present invention is a mixed solvent containing dimethyl sulfoxide and at least one selected from the group consisting of dimethylacetamide and γ-butyrolactone. Although the mixing ratio thereof is not particularly limited, provided that it is within a range which enables the chloronicotinyl compound to be dissolved, it is specifically preferable that the ratio by weight of dimethyl sulfoxide to at least one selected from the group consisting of dimethylacetamide and γ-butyrolactone be in a range of 10:90 to 90:10. Although other solvents such as ethanol, butanol, benzyl alcohol, glycerol, hydrocarbons, propylene glycol, polyethylene glycol, N-methylpyrrolidone, or the like may be optionally added, if needed, N-methylpyrrolidone is preferably used to improve the stability of the chloronicotinyl compound at low temperature. Although the content of N-methylpyrrolidone is not particularly limited, it is preferably within a range of 2 to 40% by weight of the whole solvent in view of handling convenience.
The surfactant used in the present invention is a propylene oxide / ethylene oxide block copolymer surfactant.

Although the mixing ratio of the chloronicotinyl compound, the solvent and the surfactant in the liquid insecticidal composition of the present invention is not particularly limited, it is specifically preferable that the chloronicotinyl compound be contained in an amount of 1.5 to 40% by weight, the solvent be contained in an amount of 59.9 to 98.4% by weight, and the surfactant be contained in an amount of 0.1 to 10% by weight.

### BEST MODE FOR CARRYING OUT THE INVENTION

Although the following provides a specific explanation of effects of the present invention through examples, the present invention is not limited to these examples.

### Example 1

20 g of acetamiprid was dissolved in a mixed solvent containing 37.5 g of γ-butyrolactone and 41.5 g of dimethyl sulfoxide, and 1 g of PO/EO block copolymer (HLB 12 to 18: manufactured by BASF under the name of Pluronic PE 6400) was further dissolved in the mixture as a surfactant to obtain a uniform solution.

### Comparative Example 1

20 g of acetamiprid was dissolved in 75 g of N-methylpyrrolidone, and 5 g of polyoxyethylene nonylphenyl ether (HLB 12.9) was further dissolved in the mixture as a surfactant to obtain a uniform solution.

### Comparative Example 2

7 g of acetamiprid was dissolved in 83 g of N-methylpyrrolidone, and 10 g of polyoxyethylene nonylphenyl ether (HLB 12.9) was further dissolved in the mixture as a surfactant to obtain a uniform solution.

### Comparative Example 3

7 g of imidacloprid was dissolved in 83 g of N-methylpyrrolidone, and polyoxyethylene nonylphenyl ether (HLB 12.9) was further dissolved in the mixture as a surfactant to obtain a uniform solution.

### Test Example 1 (Eye irritancy test of undiluted solution of formulation using rabbit)

### (Method)

0.1 ml of an undiluted solution of each formulation was dropped on the right eye of normal rabbit, and the rabbit was observed 1 hour, 24, 48, and 72 hours after exposure. When the irritancy was continued, the rabbit was observed every day, and until 21 days after exposure. The results are shown in Table 1.

**Table 1**

| | Ex. 1 | C. Ex. 1 | C. Ex. 2 | C. Ex. 3 |
|---|---|---|---|---|
| Degree of eye irritancy | Weak | Strong | Strong | Strong |

When N-methylpyrrolidone was used (Comparative Examples 1 to 3), eye irritancy was strong. When N-methylpyrrolidone was not used (Example 1), eye irritancy significantly decreased.

### Test Example 2 (Crystal precipitation test of 20% acetamiprid solution at low temperature)

### (Method)

This test was carried out in accordance with CIPAC MT 39.1.
After cooling each solution at -5°C and -10°C for one day, the presence of crystals was visually observed. The results are shown in Table 2.

**Table 2**

| | Ex. 1 | C. Ex. 1 |
|---|---|---|
| Crystals precipitated at -5°C | Absent | Absent |
| Crystals precipitated at -10°C | Present | Absent |

When the mixed solvent containing dimethyl sulfoxide and γ-butyrolactone (Example 1) was used, crystals were precipitated at -10°C.

### Test Example 3 (Biological evaluation test: efficacy test for cucumber thrips)

Subject crop: Cucumber (Tsubasa, 2-leaf age)
Place in which test was carried out: Pot in a green house
Spraying method: Spraying a sufficient amount of the solution that diluted with water and containing 100 ppm of active component.
Investigation method: The number of larvae existing on the second leaf was counted.

The test was carried out twice, and the total numbers of larvae that were counted are shown in Table 3.

**Table 3 Efficacy test for cucumber thrips**

| | Concentration of sprayed solution | Number of larvae existing before spraying | Number of larvae existing 8 days after spraying | Number of larvae existing 11 days after spraying | Number of larvae existing 15 days after spraying |
|---|---|---|---|---|---|
| Ex. 1 | Acetamiprid 100 ppm | 0 | 0 | 6 | 50 |
| C. Ex. 2 | Acetamiprid 100 ppm | 0 | 5 | 27 | 92 |
| C. Ex. 3 | Imidacloprid 100 ppm | 0 | 3 | 62 | 297 |
| Control | -- | 0 | 22 | 163 | 229 |

When the results of Comparative Examples 2 and 3 are compared with the results of Example 1, it is apparent that bioactivity is significantly increased in Examples.

### INDUSTRIAL APPLICABILITY

As described above, the liquid insecticidal composition of the present invention is excellent in stability at low temperature and also improved in insecticidal activity and safety. Since the chloronicotinyl compound exhibits excellent activity as an insecticide, when it is formulated to be a water-soluble agent, it becomes applicable to novel application methods as well as becoming easy to use. Accordingly, it can be stated that the industrial value of the present invention is high.

## Claims

1. A liquid insecticidal composition comprising:
(1) a chloronicotinyl compound;
(2) a solvent comprising dimethyl sulfoxide and either dimethylacetamide or γ-butyrolactone; and
(3) a propylene oxide / ethylene oxide block copolymer surfactant.

2. A liquid insecticidal composition according to claim 1, wherein the chloronicotinyl compound is acetamiprid.

3. A liquid insecticidal composition according to claim 1 or claim 2, wherein the chloronicotinyl compound (1) is contained in an amount of 1.5 to 40% by weight, the solvent (2) is contained in an amount of 59.9 to 98.4% by weight, and the surfactant (3) is contained in an amount of 0.1 to 10% by weight.

4. A liquid insecticidal composition according to any one of claims 1 to 3, wherein the ratio of dimethyl sulfoxide to either dimethylacetamide or γ-butyrolactone in the solvent is in a range of 10:90 to 90:10.

5. A liquid insecticidal composition according to any one of claims 1 to 4, wherein the solvent comprises 2 to 40% by weight of N-methylpyrrolidone relative to the whole solvent.

## Patentansprüche

1. Flüssige, insektizide Zusammensetzung, umfassend:
(1) eine Chloronicotinylverbindung,
(2) ein Lösungsmittel, umfassen Dimethylsulfoxid und entweder Dimethylacetamid oder γ-Butyrolacton, und
(3) ein Propylenoxid / Ethylenoxid-Block-Copolymer-Tensid.

2. Flüssige, insektizide Zusammensetzung nach Anspruch 1, wobei die Chloronicotinylverbindung Acetamiprid ist.

3. Flüssige, insektizide Zusammensetzung nach Anspruch 1 oder Anspruch 2, wobei die Chloronicotinylverbindung (1) in einer Menge von 1,5 bis 40 Ges.-% enthalten ist, das Lösungsmittel (2) in einer Menge von 59,9 bis 98,4 Ges.-% enthalten ist und das Tensid (3) in einer Menge von 0,1 bis 10 Ges.-% enthalten ist.

4. Flüssige, insektizide Zusammensetzung nach einem der Ansprüche 1 bis 3, wobei das Verhältnis von Dimethylsulfoxid zu entweder Dimethylacetamid oder γ-Butyrolacton in dem Lösungsmittel in dem Bereich von 10:90 bis 90:10 liegt.

5. Flüssige, insektizide Zusammensetzung nach einem der Ansprüche 1 bis 4, wobei das Lösungsmittel 2 bis 40 Ges.-% N-Methylpyrrolidon bezogen auf das gesamte Lösungsmittel umfasst.

## Revendications

1. Composition insecticide liquide comprenant :
(1) un composé chloronicotinyle ;
(2) un solvant comprenant du diméthylsulfoxyde et du diméthylacétamide ou de la γ-butyrolactone ; et
(3) un tensioactif copolymère séquencé oxyde de propylène/oxyde d'éthylène.

2. Composition insecticide liquide selon la revendication 1 où le composé chloronicotinyle est l'acétamipride.

3. Composition insecticide liquide selon la revendication 1 ou la revendication 2 ou le composé chloronicotinyle (1) est contenu en une quantité de 1,5 à 40 % en poids, le solvant (2) est contenu en une quantité de 59,9 à 98,4 % en poids et le tensioactif (3) est contenu en une quantité de 0,1 à 10 % en poids.

4. Composition insecticide liquide selon l'une quelconque des revendications 1 à 3 où le rapport du diméthylsulfoxyde au diméthylacétamide ou à la γ-butyrolactone dans le solvant est dans une plage de 10 : 90 à 90 : 10.

5. Composition insecticide liquide selon l'une quelconque des revendications 1 à 4 où le solvant comprend 2 à 40 % en poids de N-méthylpyrrolidone par rapport au solvant total.
